# EUROPÄISCHE PATENTSCHRIFT

(11) **EP 2 453 633 B1**
(45) Veröffentlichungstag und Bekanntmachung des Hinweises auf die Patenterteilung: **08.01.2020**
(21) Anmeldenummer: 11188845.9
(22) Anmeldetag: 11.11.2011
(51) Int. Cl.: H04L 29/06, H04W 12/06

(54) **TEILNEHMERIDENTIFIKATIONSEINRICHTUNG, MOBILFUNKSYSTEM UND VERFAHREN ZUR TEILNEHMERAUTHENTISIERUNG**
PARTICIPANT IDENTIFICATION APPARATUS, MOBILE RADIO SYSTEM AND METHOD FOR PARTICIPANT AUTHENTICATION
DISPOSITIF D'IDENTIFICATION DE PARTICIPANT, SYSTÈME DE RADIO MOBILE ET PROCÉDÉ D'AUTHENTIFICATION DE PARTICIPANT

(30) Priorität: 12.11.2010 DE 102010043878
(43) Veröffentlichungstag der Anmeldung: 16.05.2012
(73) Patentinhaber: Vodafone Holding GmbH, 40213 Düsseldorf (DE)
(72) Erfinder: Helmreich, Frank, 46519 Alpen (DE)
(74) Vertreter: Jostarndt Patentanwalts-AG

(56) Entgegenhaltungen:
- WO-A2-2005/018245
- WO-A2-2009/133410
- US-A1- 2005 164 737
- US-A1- 2008 064 443

## Beschreibung

Die Erfindung befasst sich mit der Authentisierung von Teilnehmern in Mobilfunknetzen. Insbesondere betrifft die Erfindung eine Teilnehmeridentifikationseinrichtung und ein Verfahren zur Teilnehmerauthentisierung in einem Mobilfunknetz.

Einem Mobilfunkteilnehmer ist üblicherweise ein Heimatnetz zugeordnet, bei dem es sich in der Regel um das Mobilfunknetz des Betreibers handelt, mit dem der Teilnehmer einen Mobilfunkvertrag geschlossen hat. In dem Heimatnetz wird dem Teilnehmer eine Rufnummer zugeordnet und es werden weitere Teilnehmerdaten des Teilnehmers registriert, denen Subskriptionsdaten zugeordnet sind, die insbesondere bei der Einbuchung des Teilnehmers in einem Mobilfunknetz geprüft werden. Die Subskriptionsdaten umfassen eine Teilnehmerkennung und weitere Authentisierungsparameter und sind üblicherweise in einer als Chipkarte ausgestalteten Teilnehmeridentifikationseinrichtung gespeichert, die in das Mobilfunkendgerät des Teilnehmers eingesetzt wird.

Unter Verwendung seiner Subskriptionsdaten kann sich ein Teilnehmer eines Heimatnetzes auch in Fremdnetzen einbuchen, soweit diese einen Zugriff durch Teilnehmer des Heimatnetzes gestatten. Diese Fähigkeit wird auch als Roaming bezeichnet und ermöglicht die Nutzung von Mobilfunkdiensten, wenn sich der Teilnehmer in einem geografischen Gebiet befindet, in dem das Heimatnetz nicht verfügbar ist. Zur Authentifizierung des Teilnehmers greifen Fremdnetze in der Regel auf die Teilnehmerdaten zurück, die im Heimatnetz des Teilnehmers registriert sind, und der Teilnehmer ist in einem Fremdnetz unter der im Heimatnetz gültigen Rufnummer erreichbar.

Ein Nachteil des Roaming besteht jedoch darin, dass für die Nutzung von Mobilfunkdiensten in Fremdnetzen in der Regel erhöhte Gebühren berechnet werden. Zudem können bestimmte Mobilfunkdienste, wie beispielsweise Datendienste, in Fremdnetzen oftmals nur eingeschränkt nutzbar oder gesperrt sein.

Um in Gebieten, die von dem Heimatnetz nicht abgedeckt sind, auf Mobilfunkdienste zuzugreifen und die Nachteile des Roaming zu umgehen, kann ein Mobilfunkteilnehmer weitere Mobilfunkverträge mit Mobilfunkbetreibern abschließen, deren Mobilfunknetze die betreffenden Gebiete versorgen. Auf diese Weise kann der Mobilfunkteilnehmer auf mehrere Heimatnetze zugreifen, die mehrere geografische Gebiete abdecken können. Er erhält jedoch für die verschiedenen Heimatnetze jeweils eine Teilnehmeridentifikationskarte, welche insbesondere die Subskriptionsdaten für das betreffende Heimatnetz enthält, und muss in jedem seiner Heimatnetze die zugehörige Teilnehmeridentifikationskarte verwenden, um das Roaming zu vermeiden.

Um jeweils die Teilnehmeridentifikationskarte des verfügbaren Heimatnetzes zu verwenden, kann der Mobilfunknutzer die Teilnehmeridentifikationskarte innerhalb seines Mobilfunkendgeräts beim Wechsel des Heimatnetzes austauschen. Dies ist allerdings umständlich und führt auch dazu, dass er unter der Rufnummer, die ihm in einem anderen Heimatnetz zugeordnet ist, nicht erreichbar ist. Alternativ kann der Teilnehmer mehrere Mobilfunkendgeräte verwenden, die jeweils eine der Teilnehmeridentifikationskarten enthalten. Dies ist jedoch gleichfalls mit erheblichen Umständen verbunden.

Eine weitere Möglichkeit zur Verwendung von Subskriptionsdaten für verschiedene Heimatnetze bietet das in der EP 1 231 800 A1 beschriebene Mobiltelefon, das die Aufnahme und den Betrieb mehrerer Teilnehmeridentifikationskarten ermöglicht. Diese Möglichkeit beschränkt den Nutzer jedoch auf die Verwendung eines speziellen Endgeräts mit Aufnahmevorrichtungen für zwei Teilnehmeridentifikationskarten.

Die WO 2005/018245 A2 offenbart ein Verfahren und eine Vorrichtung, die zur mobilen Kommunikation in mehreren Kommunikationsnetzwerken ausgestaltet sind.

Die WO 2009/133410 A2 offenbart ein Kommunikationsgerät, das in einem Kommunikationsnetzwerk verwendet werden kann. Das Kommunikationsgerät umfasst zumindest ein Kommunikationsprofil, wobei jedes Kommunikationsprofil einer geographischen Region zugeordnet ist, in der das Kommunikationsgerät genutzt werden kann. Das Kommunikationsgerät umfasst zudem Verarbeitungsmittel, die so ausgestaltet sind, dass ein aktives Kommunikationsprofil aus zumindest zwei Kommunikationsprofilen ausgewählt werden kann.

Die US 2005/0164737 A1 offenbart eine SIM-Karte, die eine Vielzahl von verschiedenen Subskriptionsdatensätzen beinhaltet, von denen einer z.B. in Abhängigkeit von dem Gebiet, in dem die SIM-Karte genutzt wird, automatisch ausgewählt und aktiviert werden kann.

Es ist eine Aufgabe der Erfindung, den Zugriff auf eine Mehrzahl von Heimatnetzen zu vereinfachen.

Die Aufgabe wird gelöst durch eine Teilnehmeridentifikationseinrichtung nach dem Anspruch 1 und durch ein Verfahren nach dem Anspruch 13. Ausgestaltungen der Teilnehmeridentifikationseinrichtung und des Verfahrens sind in den abhängigen Ansprüchen angegeben.

Gemäß einem ersten Aspekt schlägt die Erfindung eine Teilnehmeridentifikationseinrichtung zur Teilnehmerauthentisierung in einem Mobilfunknetz vor, die einen ersten Subskriptionsdatensatz zur Teilnehmerauthentisierung in einem ersten Mobilfunknetz enthält. Zudem ist wenigstens ein zweiter Subskriptionsdatensatz zur Teilnehmerauthentisierung in einem zweiten Mobilfunknetz enthalten, wobei jeweils einer der enthaltenen Subskriptionsdatensätze in Abhängigkeit von einem verfügbaren Mobilfunknetz zur Teilnehmerauthentisierung verwendbar ist.

Gemäß einem weiteren Aspekt der Erfindung wird ein Verfahren zum Authentisieren eines Teilnehmers in einem Mobilfunknetz vorgeschlagen, bei dem Daten eines in einer Teilnehmeridentifikationseinrichtung gespeicherten Subskriptionsdatensatzes verwendet werden. Darüber hinaus wird einer von mehreren in der Teilnehmeridentifikationseinrichtung gespeicherten Subskriptionsdatensätze in Abhängigkeit von einem verfügbaren Mobilfunknetz aktiviert, und die zur Teilnehmerauthentisierung verwendeten Daten werden aus dem aktivierten Subskriptionsdatensatz entnommen.

Aufgrund der Mehrzahl von in der Teilnehmeridentifikationseinrichtung gespeicherten Subskriptionsdatensätzen kann ein Teilnehmer zusätzliche Mobilfunknetze als Heimatnetze nutzen und auf diese Weise einen Roamingzugriff auf diese Mobilfunknetze vermeiden. Vorteilhaft wird hierzu lediglich eine Teilnehmeridentifikationseinrichtung verwendet, so dass der Teilnehmer sich insbesondere auf die Verwendung eines einzigen Mobilfunkendgeräts mit der Teilnehmeridentifikationseinrichtung beschränken kann und auch kein Mobilfunkendgerät benötigt, das mit einer Mehrzahl einzelner, insbesondere in Chipkarten enthaltenen, Teilnehmeridentifikationseinrichtungen betrieben werden kann.

Die verfügbaren Mobilfunknetze senden Kennungen aus, die von der Teilnehmeridentifikationseinrichtung bzw. dem zugehörigen Endgerät empfangen werden. Die empfangenen Kennungen werden zur Auswahl eines Subskriptionsdatensatzes herangezogen. Die empfangenen Kennungen der verfügbaren Netze werden zudem der Auswahl des Mobilfunknetzes zugrunde gelegt, in das der Teilnehmer eingebucht wird.

Die Teilnehmeridentifikationseinrichtung und das Verfahren umfasst die Teilnehmeridentifikationseinrichtung eine Steuerungseinrichtung, die dazu ausgestaltet ist, einen Subskriptionsdatensatz in Abhängigkeit von einer empfangenen Kennung des verfügbaren Mobilfunknetzes für die Teilnehmerauthentisierung zu aktivieren. Der jeweils aktivierte Subskriptionsdatensatz wird für die Teilnehmerauthentisierung verwendet. Für die Teilnehmerauthentisierung ist vorzugsweise jeweils genau ein Subskriptionsdatensatz aktiviert, um Konflikte zwischen verschiedenen Subskriptionsdatensätzen zu vermeiden. Die Steuerungseinrichtung ist vorzugsweise als ein Softwareprogramm ausgeführt, das in der Teilnehmeridentifikationseinrichtung ausgeführt wird.

Die Teilnehmeridentifikationseinrichtung und das Verfahrens beinhalten in einer Ausgestaltung, dass die Steuerungseinrichtung dazu ausgestaltet ist, einen vorgegebenen Subskriptionsdatensatz zur Verwendung bei der Teilnehmerauthentisierung zu aktivieren, falls die Kennung keines der Mobilfunknetze empfangen wird, denen die in der Teilnehmeridentifikationseinrichtung gespeicherten Subskriptionsdatensätze zugeordnet sind. Hierdurch wird ein Roamingzugriff auf ein Mobilfunknetz unter Verwendung eines vorgegebenen Subskriptionsdatensatzes ermöglicht, falls keines der Mobilfunknetze verfügbar ist, für die ein eigener Subskriptionsdatensatz in der Teilnehmeridentifikationseinrichtung gespeichert ist. Der vorgegebene Subskriptionsdatensatz wird nach wenigstens einem vorgegebenen Kriterium ausgewählt, beispielsweise nach der Länderzugehörigkeit verfügbarer Mobilfunknetze. Hierdurch kann insbesondere erreicht werden, dass der Teilnehmer ggf. auf nationales Roaming zurückgreifen und internationales Roaming vermeiden kann.

Eine Ausführungsform der Teilnehmeridentifikationseinrichtung und des Verfahrens beinhaltet, dass die Steuerungseinrichtung dazu ausgestaltet ist, einen Subskriptionsdatensatz aufgrund des Empfangs einer Kennung eines Mobilfunknetzes für die Teilnehmerauthentisierung in diesem Mobilfunknetz zu aktivieren. Hierdurch wird es ermöglicht, dass der Teilnehmer stets als Heimatnutzer in eines der verfügbaren Mobilfunknetze eingebucht wird, sofern die Teilnehmeridentifikationseinrichtung über einen Subskriptionsdatensatz für wenigstens eines der verfügbaren Mobilfunknetze verfügt.

Darüber hinaus ist eine Ausführungsform der Teilnehmeridentifikationseinrichtung und des Verfahrens dadurch gekennzeichnet, dass die Steuerungseinrichtung dazu ausgestaltet ist, einen vorgegebenen Subskriptionsdatensatz aufgrund eines Einschaltens der Teilnehmeridentifikationseinrichtung und/oder nach einer Beendigung einer Verbindung zu einem Mobilfunknetz zu aktivieren. Hierdurch wird erreicht, dass beim Einschalten und nach dem Verlust einer Verbindung ein definierter Subskriptionsdatensatz aktiviert ist. Dies führt insbesondere zu einem definierten Verhalten der Teilnehmeridentifikationseinrichtung. Die Auswahl eines anderen Subskriptionsdatensatzes erfolgt vorzugsweise ausgehend von dem zuvor genannten vorgegebenen Subskriptionsdatensatz, wobei aufgrund einer Auswahl der aktivierte Subskriptionsdatensatz gewechselt wird, um zur Teilnehmerauthentisierung in einem Mobilfunknetz verwendet zu werden.

Es kann der Fall eintreten, dass die in der Teilnehmeridentifikationseinrichtung vorgesehenen Subskriptionsdatensätze zunächst nicht vollständig sind. Dies kann beispielsweise daraus resultieren, dass die enthaltenen Informationen von einem Mobilfunknetz bzw. dessen Betreiber nicht vollständig zur Verfügung gestellt worden sind. Die Teilnehmeridentifikationseinrichtung und das Verfahren sehen daher vor, dass die Steuerungseinrichtung dazu ausgestaltet ist, einen ersten vollständigen Subskriptionsdatensatz zu aktivieren, wenn ein zweiter Subskriptionsdatensatz, dem ein verfügbares Mobilfunknetz zugeordnet ist, unvollständig ist, und dass nach einer Anmeldung unter Verwendung des ersten Subskriptionsdatensatzes die fehlenden Informationen von dem Mobilfunknetz angefordert und in dem unvollständigen Subskriptionsdatensatz gespeichert werden. Hierdurch kann der Subskriptionsdatensatz vervollständigt werden. Nach der Vervollständigung kann die Steuereinrichtung den betreffenden Subskriptionsdatensatz aktiveren. Unter Verwendung dieses Subskriptionsdatensatzes kann der Teilnehmer dann erneut in das zugehörige Mobilfunknetz eingebucht werden.

Die Verwendung der in dem Subskriptionsdatensatz enthaltenen Daten bei der Teilnehmerauthentisierung kann die Übermittlung einzelner Daten an das Mobilfunknetz umfassen. Gleichfalls kann vorgesehen sein, dass die Daten zur Erzeugung von weiteren Informationen verwendet werden, die an das Mobilfunknetz gesendet werden. In einer Ausgestaltung der Teilnehmeridentifikationseinrichtung und des Verfahrens ist vorgesehen, dass der erste und/oder der zweite Subskriptionsdatensatz eine Teilnehmerkennung umfasst, die in dem jeweiligen Mobilfunknetz, insbesondere in einem Heimatregister des jeweiligen Mobilfunknetzes, registriert ist. Die Teilnehmerkennung wird vorzugsweise an das Mobilfunknetz gesendet, um den Teilnehmer zu identifizieren. In einer weiteren Ausgestaltung der Teilnehmeridentifikationseinrichtung und des Verfahrens umfasst der erste und/oder zweite Subskriptionsdatensatz wenigstens einen kryptografischen Authentisierungsschlüssel. Mittels des Authentisierungsschlüssels kann beispielsweise eine von einem Mobilfunknetz übermittelte Information verschlüsselt und an das Mobilfunknetz zurückgesendet werden, welches die Information prüft, um den Teilnehmer zu authentifizieren. Insbesondere kann die verschlüsselte Information mit einer Version der verschlüsselten Information verglichen werden, die mittels eines in dem jeweiligen Mobilfunknetz gespeicherten Exemplars des Authentisierungsschlüssels erzeugt worden ist, wobei der Teilnehmer bei Übereinstimmung der verschlüsselten Informationen erfolgreich authentisiert wird.

Des Weiteren zeichnet sich eine Ausgestaltung der Teilnehmeridentifikationseinrichtung und des Verfahrens dadurch aus, dass die Teilnehmeridentifikationseinrichtung netzübergreifende Daten enthält, auf die unabhängig von der Aktivierung eines Subskriptionsdatensatzes zugegriffen werden kann. Die netzübergreifenden Daten, bei denen es sich beispielsweise um persönliche Daten des Teilnehmers handeln kann, wie etwa ein Adressbuch und/oder gesendete und/oder empfangene Nachrichten, sind somit stets für den Teilnehmer verfügbar, unabhängig davon, in welches Mobilfunknetz der Teilnehmer eingebucht wird und welcher Subskriptionsdatensatz hierzu verwendet wird.

Eine Ausführungsform der Teilnehmeridentifikationseinrichtung und des Verfahrens sieht vor, dass die Teilnehmeridentifikationseinrichtung wenigstens teilweise in einer eine Chipkarte enthalten ist, die in ein Mobilfunkendgerät eingesetzt werden kann. Insbesondere kann es sich um eine SIM (Subscriber Identity Module)-Karte oder eine Chipkarte mit einer USIM (Universal Subscriber Identity Module)-Anwendung handeln. Vorzugsweise sind zumindest die Subskriptionsdatensätze in der Chipkarte gespeichert. Zudem kann die Steuerungseinrichtung vorteilhaft in der Chipkarte enthalten sein. Insbesondere kann die Steuerungseinrichtung als ein Softwareprogramm ausgestaltet sein, das in der Chipkarte ausgeführt wird. Gleichfalls kann die Teilnehmeridentifikationseinrichtung jedoch auch in das Endgerät selbst integriert sein.

Neben der Teilnehmeridentifikationseinrichtung und dem Verfahren schlägt die Erfindung gemäß einem weiteren Aspekt ein Mobilfunkendgerät vor, das die Teilnehmeridentifikationseinrichtung oder eine ihrer Ausgestaltungen umfasst. Weiterhin wird ein Mobilfunksystem vorgeschlagen, das die Teilnehmeridentifikationseinrichtung oder eine ihrer Ausgestaltungen und/oder ein Mobilfunkendgerät der zuvor beschriebenen Art enthält.

Innerhalb der Mobilfunknetze, denen die verschiedenen Subskriptionsdatensätze zugeordnet sind, ist dem Teilnehmer in einer Ausgestaltung der Erfindung jeweils eine Rufnummer zugeordnet, mit der beispielsweise Anrufe zu dem Teilnehmer aufgebaut und/oder Nachrichten an den Teilnehmer adressiert werden können. Wenn der Teilnehmer unter Verwendung eines Subskriptionsdatensatzes in ein Mobilfunknetz eingebucht wird, dann kann er in Bezug auf die Rufnummern, die den übrigen in der Teilnehmeridentifikationseinrichtung gespeicherten Subskriptionsdatensätzen zugeordnet sind, als nicht erreichbar registriert sein.

Um dennoch die Erreichbarkeit des Teilnehmers unter einer anderen Rufnummer sicherzustellen, beinhaltet eine Ausführungsform des Mobilfunksystems, dass dem ersten und zweiten Subskriptionsdatensatz jeweils eine Rufnummer zugeordnet. Weiterhin umfasst das System in dieser Ausführungsform eine Rufumleitungseinrichtung, die dazu ausgestaltet ist, aufgrund einer Mitteilung über die Aktivierung des zweiten Subskriptionsdatensatzes eine Rufumleitung von der dem ersten Subskriptionsdatensatz zugeordneten Rufnummer zu der dem zweiten Subskriptionsdatensatz zugeordneten Rufnummer zu initiieren. Die Mitteilung über die Aktivierung kann insbesondere angeben, dass die Aktivierung des zweiten Subskriptionsdatensatzes vorgenommen worden ist oder vorgenommen werden soll.

Auf diese Weise ist der Teilnehmer auch dann unter der Rufnummer erreichbar, die dem ersten Subskriptionsdatensatz zugeordnet ist, wenn er sich in ein andres Mobilfunknetz unter Verwendung von Subskriptionsdaten einbucht, die diesem Netz zugeordnet sind. Die Rufumleitungseinrichtung ist in einer Ausgestaltung des Systems in dem ersten Mobilfunknetz enthalten. Eine weitere Ausgestaltung des Systems ist dadurch gekennzeichnet, dass die Teilnehmeridentifikationseinrichtung und/oder das zweite Mobilfunknetz dazu eingerichtet ist, die Mitteilung über die Aktivierung an die Rufumleitungseinrichtung zu senden.

Darüber hinaus ist vorzugsweise vorgesehen, dass die Abrechnung von Gebühren für die Nutzung von Mobilfunkdiensten durch den Teilnehmer über ein vorgegebenes Mobilfunknetz erfolgt. Daher beinhaltet eine Ausführungsform des Mobilfunksystems, dass ein Mobilfunknetz dazu eingerichtet ist, nach der Teilnehmerauthentisierung mittels eines in der Teilnehmeridentifikationseinrichtung aktivierten Subskriptionsdatensatzes in dem Mobilfunknetz, Abrechnungsinformationen über eine Nutzung von Mobilfunkdiensten an ein Mobilfunknetz zu übermitteln, das einem vorgegebenen Subskriptionsdatensatz zugeordnet ist. Der vorgegebene Subskriptionsdatensatz kann von der Teilnehmeridentifikationseinrichtung bei der Anmeldung in dem Mobilfunknetz spezifiziert werden. Alternativ kann der vorgegebenen Subskriptionsdatensatz in den Mobilfunknetz hinterlegt sein.

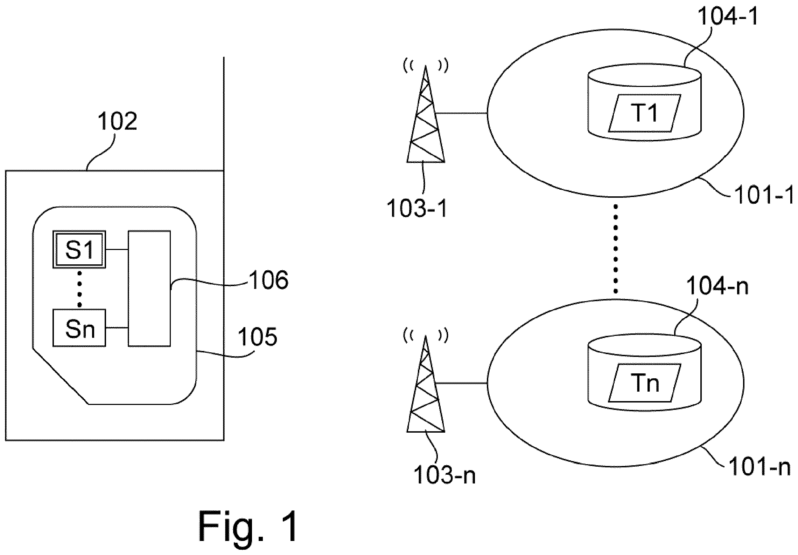

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf Figur 1 beschrieben werden.

Figur 1 zeigt eine schematische Darstellung mit einem Mobilfunkendgerät, in das eine erfindungsgemäße Teilnehmeridentifikationseinrichtung eingesetzt ist, und das mit einer Mehrzahl von Heimatnetzen verbunden werden kann.

In der Figur 1 ist schematisch ein Mobilfunksystem gezeigt, das wenigstens zwei Mobilfunknetze 101-i (i = 1,..., n) beinhaltet. Die Anzahl der Mobilfunknetze wird in der Figur mit n angegeben (n ≥ 2). Die Mobilfunknetze 101-i ermöglichen die Herstellung von drahtlosen Verbindungen zu Mobilfunkendgeräten 102. Beispielhaft ist in der Figur 1 ein solches Mobilfunkendgerät 102 dargestellt.

Der drahtlose Zugriff auf die Mobilfunknetze 101-i erfolgt über zugehörige Funkzugangsnetze, die Bestandteile der Mobilfunknetze 101-i sind. Die Funkzugangsnetze umfassen jeweils eine Vielzahl von Funkzellen, die jeweils von einer Basisstation 103-i versorgt werden. In der Figur 1 ist für jedes Mobilfunknetz 101-i exemplarisch jeweils eine Basisstation 103-i dargestellt. Die Funkzugangsnetze unterstützen vorzugsweise die Mobilität des Teilnehmers. Wenn ein Teilnehmer sich innerhalb des von einem Funkzugangsnetz abgedeckten geografischen Gebiets von einer ersten Funkzelle in eine zweite Funkzelle bewegt, dann wird die Verbindung des Teilnehmers durch ein so genanntes Handover von der ersten an die zweite Funkzelle übergeben. Hierzu kann die Verbindung beispielsweise von einer ersten Basisstation 103-i, welche die erste Funkzelle versorgt, auf eine zweite Basisstation 103-i umgeschaltet werden, welche die zweite Funkzelle versorgt.

Bei den Mobilfunkendgeräten 102 handelt es sich um elektronische Kommunikationsgeräte, die insbesondere über eine Funkeinrichtung für die Herstellung einer Funkverbindung zu einem Mobilfunknetz 101-i verfügen und als mobile Endgeräte ausgestaltet sein können. Beispiele für Mobilfunkendgeräte 102, die über eine derartige Funkeinrichtung verfügen können, sind Mobiltelefone, PDAs (Personal Digital Assistants) und Notebook-Computer. Weitere Beispiele sind so genannte M2M (Machine to Machine)-Geräte, die für den automatischen Informationsaustausch mit anderen Geräten vorgesehen sind, und/oder Telemetrie- oder andere mobilfunkfähige Geräte, die in Fortbewegungsmitteln, wie Fahrzeugen, Flugzeugen oder Schiffen, betrieben werden.

Die Mobilfunknetze 101-i können jeweils einen oder mehrere Mobilfunkdienste zur Nutzung bereitstellen. Beispiele für solche Dienste sind Sprach- und Videotelefonie, Nachrichtenübermittlungsdienste, wie SMS (Short Message Service) und MMS (Multimedia Messaging Service), sowie Datendienste für den Zugriff auf das Internet oder andere mit einem Mobilfunknetz 101-i verbundene (und in der Figur nicht dargestellte) Netze. Für den Zugriff auf die jeweils angebotenen Dienste können leitungs- oder paketvermittelnde Verbindungen zwischen den Mobilfunknetzen 101-i und den verbundenen Mobilfunkendgeräten 102 aufgebaut werden. Für die Herstellung dieser Verbindungen beinhalten die Mobilfunknetze 101-i Vermittlungseinheiten, die in der Figur nicht dargestellt sind. Des Weiteren können die Mobilfunknetze 101-i weitere Einheiten enthalten, insbesondere Einheiten zur Bereitstellung der Dienste, beispielsweise zur Nachrichtenübermittlung.

Untereinander sind die Mobilfunknetze 101-i in geeigneter Weise verbunden, so dass zwischen Teilnehmern in verschiedenen Mobilfunknetzen 101-i Kommunikationsverbindungen aufgebaut sowie Nachrichten und/oder andere Daten ausgetauscht werden können. Zudem sind die Mobilfunknetze 101-i derart miteinander verbunden, dass Netzwerkeinheiten der verschiedenen Mobilfunknetze 101-i Steuerungs- und/oder Verwaltungsdaten untereinander austauschen können. Ein solcher Datenaustausch erfolgt beispielsweise zur Durchführung der Teilnehmerauthentifizierung beim Roaming eines Teilnehmers, die unter Verwendung von Teilnehmerdaten vorgenommen wird, welche in einem anderen Mobilfunknetz 101-i hinterlegt sind als in dem Mobilfunknetz 101-i, in das sich der Teilnehmer einbucht.

In beispielhaften und nicht einschränkend zu verstehenden Ausführungsformen können die Mobilfunknetze 101-i nach einem Standard des 3GPP (3rd Generation Partnership Project) ausgestaltet sein, beispielsweise nach dem GSM (Global System for Mobile Communications)-, UMTS (Universal Mobile Telecommunications System) oder LTE/SEA (Long-Term Evolution/ Service Architecture Evolution)-Standard. In diesen Ausgestaltungen können die Vermittlungseinheiten in leitungsvermittelnden Mobilfunknetzen 101-i bzw. den leitungsvermittelnden Teilen der Mobilfunknetze 101-i etwa MSCs (Mobile Switiching Centres) sein. In paketvermittelnden Netzen können die Vermittlungseinheiten SGSNs (Serving GPRS Support Nodes) oder als S-GWs (Serving Gateways) und MMEs (Mobility Management Entities) umfassen.

Die Basisstationen 103-i können bei Mobilfunknetzen 101-i nach einem 3GPP-Standard beispielsweise jeweils eine BSS (Base Station Subsystem) nach dem GSM-Standard mit wenigstens einer BTS (Base Transceiver Station) und einem zugeordneten BSC (Base Station Controller) umfassen, wenigstens eine NodeB gemäß dem UMTS-Standard mit einem zugeordneten RNC (Radio Network Controller) oder eine eNodeB nach dem LTE-Standard.

Zur Verwaltung von den Mobilfunkteilnehmern bzw. den Mobilfunkteilnehmern zugeordneten Teilnehmerdaten enthalten die Mobilfunknetze 101-i jeweils ein Heimatregister 104-i, in dem Teilnehmerdaten gespeichert sind. In dem Heimatregister 104-i eines Mobilfunknetzes 101-i sind die Teilnehmerdaten der Mobilfunkteilnehmer gespeichert, denen das Mobilfunknetz 101-i als Heimatnetz zugeordnet ist. Eine solche Zuordnung kann sich insbesondere daraus ergeben, dass der Teilnehmer mit dem Betreiber des jeweiligen Mobilfunknetzes 101-i einen Mobilfunkvertrag abgeschlossen hat.

Die Teilnehmerdaten eines Teilnehmers umfassen eine dem Teilnehmer zugeordnete Kennung zur Identifizierung des Teilnehmers sowie eine dem Teilnehmer zugeordnete Rufnummer (MSISDN - Mobile Subscriber Integrated Services Digital Network Number), unter der Sprach- und/oder Datenverbindungen zu dem Teilnehmer aufgebaut werden können und/oder Nachrichten an den Teilnehmer gesendet werden können. Die Teilnehmerkennung kann einen den Teilnehmer eindeutig identifizierenden Teil und einen das Mobilfunknetz 101-i identifizierenden Teil umfassen. Insbesondere kann es sich um eine IMSI (International Mobile Subscriber Identity) handeln, welche die MCC (Mobile Country Code) und den MNC (Mobile Network Code) des Mobilfunknetzes 101-i sowie die MSIN (Mobile Subscriber Identification Number) des Teilnehmers beinhaltet.

Des Weiteren können die Teilnehmerdaten einen oder mehrere kryptografische Authentisierungsschlüssel umfassen, die zur Authentifizierung eines Teilnehmers beim Einbuchen in das Mobilfunknetz 101-i verwendet werden und vorzugsweise in besonders abgesicherter Weise in dem Heimatregister 104-i gespeichert sind. Die erfolgreiche Authentifizierung des Teilnehmers bei der Einbuchung ist eine Voraussetzung dafür, dass der Teilnehmer auf Dienste des jeweiligen Mobilfunknetzes 101-i zugreifen kann.

Darüber hinaus können in den Teilnehmerdaten eines Teilnehmers dessen Berechtigungen zur Nutzung der von dem Mobilfunknetz 101-i bereitgestellten Dienste hinterlegt sein. Zudem können verschiedene Netzzusatzdienste über das Heimatregister 104-i aktiviert und deaktiviert werden, wie beispielsweise eine Rufumleitung.

In einem Mobilfunknetz 101-i, das nach einem 3GPP-Standard ausgestaltet ist, kann das zugehörige Heimatregister 104-i ein HLR (Home Location Register) und/oder ein HSS (Home Subscription Server) sein. Die kryptografischen Schlüssel sind in diesen Ausgestaltungen in einem sicheren AuC (Authentication Center) gespeichert, das in das Heimatregister 104-i integriert ist.

Für den Zugriff auf die Mobilfunknetze 101-i werden Teilnehmeridentifikationseinheiten 105 verwenden, von denen in der Figur 1 beispielhaft eine Teilnehmeridentifikationseinheit 105 dargestellt ist. Die Teilnehmeridentifikationseinheiten 105 können in Chipkarten enthalten sein, die einen Mikrocontroller zum Ausführen von Programmen und zum Speichern von Daten aufweisen, und können in die von den Teilnehmern verwendeten Mobilfunkendgeräte 102 eingesetzt werden, wie in der Figur 1 beispielhaft für das Mobilfunkendgerät 102 gezeigt. Gleichfalls können die Teilnehmeridentifikationseinheiten 105 in die Mobilfunkendgeräte 102 integriert werden, beispielsweise in einem gesonderten Chip oder in einem Hauptmikrocontroller der Mobilfunkendgeräte 102. Die Teilnehmeridentifikationseinheiten 105 umfassen in einer Ausgestaltung Daten, die in der Chipkarte und/oder im Endgerät 102 gespeichert sind, sowie Softwaremodule, die in der Chipkarte und/oder im Endgerät 102 ausgeführt werden.

In den Teilnehmeridentifikationseinheiten 105 sind insbesondere Subskriptionsdatensätze der Teilnehmer gespeichert, die zur Teilnehmerauthentisierung verwendet werden, wenn ein Teilnehmer sich mit seinem Mobilfunkendgerät 102 in ein Mobilfunknetz 101-i einbucht. Ein Subskriptionsdatensatz ist einem Teilnehmerdatensatz in einem Heimatregister 104-i eines Mobilfunknetzes 101-i zugeordnet und umfasst Informationen, die anhand der Teilnehmerdaten überprüft werden können. Insbesondere enthält ein Subskriptionsdatensatz die Teilnehmerkennung des Teilnehmers, die vorzugsweise auch im Heimatregister 104-i registriert ist. Die Teilnehmerkennung kann eine permanente Teilnehmerkennung sein. Zusätzlich oder alternativ kann es sich um eine temporäre Teilnehmerkennung handeln, die dem Teilnehmer temporär von einem Mobilfunknetz 101-i zugeordnet wird. Zudem kann der Authentisierungsschlüssel des Teilnehmers in dem Subskriptionsdatensatz enthalten sein.

Wenn sich ein Teilnehmer mit seinem Mobilfunkendgerät 102 in einem Mobilfunknetz 101-i einbucht, dann wird in einer Ausgestaltung die Teilnehmerkennung an das Mobilfunknetz 101-i übermittelt. Anhand der Teilnehmerkennung wird im Heimatregister 104-i der Authentisierungsschlüssel des Teilnehmers bestimmt und mithilfe des Authentisierungsschlüssels eine Information, vorzugsweise eine Zufallszahl, verschlüsselt. Die Information wird zudem von dem Mobilfunknetz 101-i an das Mobilfunkendgerät 102 gesendet und in der Teilnehmeridentifikationseinheit 105 des Mobilfunkendgeräts 102 mit dem dort gespeicherten Authentisierungsschlüssel verschlüsselt. Die verschlüsselte Information wird sodann an das Mobilfunknetz 101-i zurückgesendet und mit der verschlüsselten Informationen verglichen, die mit dem im Heimatregister 104-i gespeicherten Authentisierungsschlüssel erzeugt worden ist. Stimmen die verschlüsselten Informationen überein, ist der Teilnehmer erfolgreich authentifiziert.

Sofern sich der Teilnehmer im Heimatnetz einbucht, werden zur Teilnehmerauthentisierung die Teilnehmerdaten verwendet, die im Heimatregister 104-i des Heimatnetzes gespeichert sind. Beim Roaming, d.h. beim Einbuchen in einem Fremdnetz, werden ebenfalls die Teilnehmerdaten verwendet, die im Heimatregister 104-i des Heimatnetzes gespeichert sind. Dabei stellt das Heimatnetz dem Fremdnetz auf Anforderung den Authentisierungsschlüssel und/oder die damit verschlüsselte Information bereit. Das Heimatnetz, an das die Anforderung von dem Fremdnetz zu adressieren ist, kann beispielsweise anhand der Teilnehmerkennung ermittelt werden, die von dem Mobilfunkendgerät 102 des Teilnehmers beim Einbuchen in das Fremdnetz übermittelt worden ist, sofern die Teilnehmerkennung das Heimatnetz identifiziert, wie es etwa bei einer als IMSI ausgestalteten Teilnehmerkennung der Fall ist.

Neben den Subskriptionsdaten können die Teilnehmeridentifikationseinheiten 105 weitere Daten enthalten. Hierbei kann es sich beispielsweise um netzspezifische und/oder netzübergreifende Steuerungsdaten für den Zugriff auf Mobilfunknetze 101-i handeln, wobei netzspezifische Steuerungsdaten beim Zugriff auf ein bestimmtes Mobilfunknetz 101-i und netzübergreifende Steuerungsdaten beim Zugriff auf verschiedene Mobilfunknetze 101-i verwendet werden können. Darüber hinaus können in der Teilnehmeridentifikationseinheit 105 weitere Daten des Teilnehmers gespeichert werden, die unabhängig von dem Zugriff auf ein Mobilfunknetz 101-i verwendet werden. Hierbei kann es sich insbesondere um ein Adressbuch des Teilnehmers handeln, in dem Kontaktdaten von Kommunikationspartnern des Teilnehmers gespeichert werden können, und/oder um empfangene und/oder gesendete Mitteilungen des Teilnehmers.

Wenn die Mobilfunknetze 101-i, wie zuvor beschrieben, nach einem 3GPP-Standard ausgestaltet sind, kann die Teilnehmeridentifikationseinheit 105 eine SIM-Karte nach dem GSM-Standard sein und/oder eine Chipkarte mit einer USIM-Anwendung.

Die in der Figur 1 beispielhaft dargestellte Teilnehmeridentifikationseinheit 105 ermöglicht es einem Teilnehmer, in mehreren Mobilfunknetzen 101-i als Heimatnutzer registriert zu werden. Dies bedeutet, dass einem Teilnehmer mehrere Heimatnetze zugeordnet sind, in die er sich einbuchen kann, ohne einen Roaming-Zugriff vornehmen zu müssen. In einem möglichen Szenario werden die verschiedenen Heimatnetze des Teilnehmers in verschiedenen geografischen Gebieten, insbesondere in verschiedenen Ländern, von einem Betreiber betrieben, der es seinen Kunden mithilfe der Teilnehmeridentifikationseinheit 105 ermöglichen kann, in verschiedenen Ländern auf seine Mobilfunknetze 101-i zuzugreifen, ohne Roaming nutzen zu müssen. Gleichfalls können die unterschiedlichen Heimatnetze von verschiedenen Betreibern betrieben werden, die beispielsweise miteinander vereinbart haben, Teilnehmern, die einen Mobilfunkvertrag mit einem der Betreiber abgeschlossen haben, auch Zugriff auf das Mobilfunknetz 101-i eines anderen Betreibers zu gewähren, ohne dass der Teilnehmer Roaming nutzen muss.

In der Teilnehmeridentifikationseinheit 105 sind mehrere Subskriptionsdatensätze Si (i = 1,...,n) für unterschiedliche Mobilfunknetze 101-i gespeichert. Jeder Subskriptionsdatensatz Si ist einem Mobilfunknetz 101-i bzw. den in einem Mobilfunknetz 101-i für den Teilnehmer registrierten Teilnehmerdaten Ti zugeordnet. Zusätzlich kann vorgesehen sein, dass die Subskriptionsdatensätze Si für die verschiedenen Mobilfunknetze 101-i jeweils durch netzspezifische Steuerungsparameter für das betreffende Mobilfunknetz 101-i ergänzt werden, auf die bei der Verwendung des Mobilfunkendgeräts 102 in dem Mobilfunknetz 101-i zugegriffen wird. Derartige Steuerungsparameter können beispielsweise die Netzeinheiten festlegen, auf die bei der Nutzung bestimmter Dienste in den jeweiligen Mobilfunknetzen 101-i zugegriffen werden soll. Somit können für unterschiedliche Netze verschiedene Netzeinheiten für die Nutzung von Diensten vorgegebenen werden, beispielsweise unterschiedliche Zugangspunkte für Nachrichten- oder Datendienste.

Die verschiedenen in der Teilnehmeridentifikationseinheit 105 gespeicherten Subskriptionsdatensätze Si sowie ggf. die zugehörigen Steuerungsparameter werden beispielsweise bei der Herstellung oder im Zusammenhang mit der Ausgabe der Teilnehmeridentifikationseinheit 105 darin gespeichert. Gleichfalls kann vorgesehen sein, dass während des Lebenszyklus der Teilnehmeridentifikationseinheit 105 Subskriptionsdatensätze Si ergänzt und/oder gelöscht werden. Dies kann entweder an einer Servicestelle eines Mobilfunkbetreibers vorgenommen werden, oder über ein Mobilfunknetz 101-i mittels eines so genannten OTA (Over the Air)-Mechanismus, der es ermöglicht, Daten der Teilnehmeridentifikationseinheit 105 über das Mobilfunknetz 101-i zu verändern. Der OTA-Mechanismus verwendet zur Sicherung des Fernzugriffs auf die Teilnehmeri-dentifikationseinheit 105 kryptografische Verfahren, die unter Verwendung von kryptografischen Schlüsseln (OTA-Schlüsseln) ausgeführt werden.

Zudem kann vorgesehen, dass Subskriptionsdatensätze Si zunächst unvollständig in der Teilnehmeridentifikationseinheit 105 eingerichtet werden. Dies kann beispielsweise erfolgen, wenn nicht alle in den Subskriptionsdatensätzen Si enthaltenen Informationen bei der Speicherung der Subskriptionsdatensätze vorliegen. Insbesondere kann es vorkommen, dass der Authentisierungsschlüssel für ein Mobilfunknetz 101-i zunächst nicht bekannt ist, da er beispielsweise von dessen Betreiber aus Sicherheitsgründen nicht mitgeteilt wird. In diesem Fall kann der entsprechende Subskriptionsdatensatz Si zunächst ohne den Authentisierungsschlüssel in der Teilnehmeridentifikationseinrichtung 105 gespeichert werden. Die fehlenden Bestandteile unvollständiger Subskriptionsdatensätze können in einer Ausgestaltung später von dem betreffenden Mobilfunknetz bezogen werden, wie weiter unten noch erläutert wird.

In Teilnehmeridentifikationseinheiten 105 verschiedener Teilnehmer können auch Subskriptionsdatensätze Si für unterschiedliche Mobilfunknetze 101-i gespeichert werden. In der beispielhaften Illustration der Figur 1 verfügt die gezeigte Teilnehmeridentifikationseinheit 105 über jeweils einen Subskriptionsdatensatz Si für jedes der dargestellten Mobilfunknetze 101-i. Andere Teilnehmeridentifikationseinheiten 105 können jedoch Subskriptionsdatensätze Si für Teilmengen der dargestellten Mobilfunknetze 101-i enthalten und/oder Subskriptionsdatensätze Si für andere, in der Figur 1 nicht dargestellte Mobilfunknetze.

Von den in der Teilnehmeridentifikationseinheit 105 gespeicherten Subskriptionsdatensätzen Si wird zum Einbuchen in ein Mobilfunknetz 101-i jeweils einer ausgewählt und für die Teilnehmerauthentisierung aktiviert. Die übrigen Subskriptionsdatensätze sind dann deaktiviert. Für die Steuerung der Aktivierung der Subskriptionsdatensätze Si ist in der dargestellten Ausgestaltung eine Steuerungseinrichtung 106 vorgesehen. Die Steuerungseinrichtung 106 kann eine Softwareapplikation sein, die in der Teilnehmeridentifikationseinheit 105 ausgeführt wird. Innerhalb der Teilnehmeridentifikationseinheit 105 kann die Steuerungseinrichtung 106 beispielsweise in eine bereits vorhandene Applikation zur Netzauswahl integriert werden bzw. mit dieser Zusammenwirken, um in einer noch zu beschreibenden Weise die Netzauswahl vorzunehmen bzw. zu beeinflussen. Gleichfalls kann die Steuerungseinrichtung 106 jedoch auch als eine Applikation ausgestaltet sein, die außerhalb der Teilnehmeridentifikationseinheit 105 in dem Mobilfunkendgerät 102 ausgeführt wird.

Einer der Subskriptionsdatensätze Si ist als Masterdatensatz ausgestaltet. Das Mobilfunknetz 101-i, dem der Masterdatensatz zugeordnet ist, wird im Folgenden auch als Hauptnetz des Teilnehmers bezeichnet. Das Hauptnetz kann beispielsweise das Mobilfunknetz 101-i sein, auf das der Teilnehmer voraussichtlich am häufigsten zugreift, und/oder das Mobilfunknetz 101-i des Betreibers, der die Teilnehmeridentifikationseinheit 105 ausgibt (diese Mobilfunknetze 101-i können auch identisch sein). Bei der in der Figur 1 gezeigten Teilnehmeridentifikationseinheit 105 ist der Subskriptionsdatensatz S1 als Masterdatensatz ausgestaltet und das zugehörige Mobilfunknetz 101-1 als Hauptnetz. Der Masterdatensatz S1 wird in einer Ausgestaltung insbesondere beim Einschalten der Teilnehmeridentifikationseinheit 105 aktiviert. Das Einschalten der Teilnehmeridentifikationseinheit 105 wird dabei durch das Einschalten des Mobilfunkendgeräts 102 bewirkt, in das die Teilnehmeridentifikationseinheit 105 eingesetzt ist. Ausgehend von dem aktivierten Masterdatensatz S1 kann die Steuerungseinrichtung 106 die Aktivierung eines anderen Subskriptionsdatensatzes Si vornehmen, d.h. die Aktivierung wechseln, um den Teilnehmer in einem bestimmten Mobilfunknetz 101-i zu authentisieren.

Ferner kann vorgesehen sein, dass über den Masterdatensatz S1 ein OTA-Fernzugriff auf die Teilnehmeridentifikationseinheit 105 erfolgt. Das bedeutet, dass der oder die innerhalb der Teilnehmeridentifikationseinheit 105 benötigten OTA-Schlüssel dem Masterdatensatz S1 zugeordnet sein können. Die entsprechenden netzseitig verwendeten OTA-Schlüssel sind in dem Hauptnetz 101-1 des Teilnehmers gespeichert. Ein OTA-Zugriff kann somit lediglich über das Hauptnetz durchgeführt werden. Hierdurch wird die Sicherheit vor unberechtigten Manipulationen der Teilnehmeridentifikationseinheit 105 erhöht.

Die Auswahl eines Subskriptionsdatensatzes Si zur Verwendung bei der Teilnehmerauthentisierung erfolgt in einer Ausgestaltung bereits bei der Auswahl eines Mobilfunknetzes 101-i, in das der Teilnehmer eingebucht wird. Dabei wird die Netzauswahl vorzugsweise davon beeinflusst, für welche Mobilfunknetze 101-i den in der Teilnehmeridentifikationseinheit 105 gespeicherten Subskriptionsdatensätze Si vorhanden sind. Insbesondere wird stets ein Mobilfunknetz 101-i ausgewählt, dem ein Subskriptionsdatensatz Si zugeordnet ist, sofern ein solches Mobilfunknetz 101-i verfügbar ist.

Um die Auswahl eines Mobilfunknetzes 101-i vorzunehmen, ermittelt das Mobilfunkendgerät 102 die Mobilfunknetze 101-i, die am aktuellen Standort des Mobilfunkendgeräts 102 verfügbar sind. Dies sind die Mobilfunknetze 101-i mit einer Basisstation 103-i, von der das Mobilfunkendgerät 102 Signale empfängt, deren Stärke einen Schwellenwert überschreitet. Zur Identifizierung der Mobilfunknetze 101-i im Mobilfunkendgerät 102 senden die Basisstationen 103-i der Mobilfunknetze 101-i jeweils die Netzkennung des Mobilfunknetzes 101-i aus, die beispielsweise eine Kombination des MCC und des MNC umfassen kann. Die empfangenen Netzkennungen der verfügbaren Mobilfunknetze 101-i werden innerhalb des Mobilfunkendgeräts 102 an die Teilnehmeridentifikationseinheit 105 übergeben und dort bei der Netzauswahl herangezogen.

Bei der Netzauswahl prüft die Steuerungseinrichtung 106, ob für wenigstens eines der verfügbaren Mobilfunknetze 101-i ein Subskriptionsdatensatz Si in der Teilnehmeridentifikationseinheit 105 gespeichert ist. Wenn genau ein solches Mobilfunknetz 101-i verfügbar ist, dann wird dieses Mobilfunknetz 101-i ausgewählt. Ferner wählt die Steuerungseinrichtung 106 den zugehörigen Subskriptionsdatensatz Si zur Verwendung bei der Teilnehmerauthentisierung aus.

Wenn die Steuerungseinrichtung 106 feststellt, dass mehrere Mobilfunknetze 101-i verfügbar sind, denen jeweils ein in der Teilnehmeridentifikationseinheit 105 zugeordneter Subskriptionsdatensatz Si zugeordnet ist, dann wählt die Steuerungseinrichtung 106 aus diesen Mobilfunknetzen 101-i eines aus. Die Auswahl kann anhand von Prioritäten vorgenommen werden, die den Mobilfunknetzen 101-i bzw. den Subskriptionsdatensätzen 101-i innerhalb der Teilnehmeridentifikationseinheit 105 zugeordnet sind. Dabei wählt die Steuerungseinrichtung 106 aus den verfügbaren Mobilfunknetzen 101-i dasjenige aus, dessen Subskriptionsdatensatz 101-i die höchste Priorität zugeordnet ist. Zudem wird der zugehörige Subskriptionsdatensatz 106 zur Verwendung bei der Teilnehmerauthentisierung ausgewählt. Von den in der Teilnehmeridentifikationseinheit 105 gespeicherten Subskriptionsdatensätzen Si ist dem Masterdatensatz 101-i vorzugsweise die höchste Priorität zugeordnet. Hierdurch wird erreicht, dass stets das Hauptnetz 101-1 des Teilnehmers ausgewählt wird, wenn es am Standort des Mobilfunkendgeräts 102 verfügbar ist.

Wenn die Steuerungseinrichtung 106 feststellt, dass für keines der verfügbaren Mobilfunknetze 101-i ein Subskriptionsdatensatz Si in der Teilnehmeridentifikationseinheit 105 gespeichert ist, dann erfolgt ein Roaming-Zugriff auf eines der verfügbaren Mobilfunknetze 101-i. Zur Teilnehmerauthentisierung wird in einer Ausgestaltung der Masterdatensatz Si verwendet. Alternativ kann nach vorgegebenen, in der Teilnehmeridentifikationseinheit 105 hinterlegten Kriterien auch ein anderer Subskriptionsdatensatz Si ausgewählt werden, der zur Teilnehmerauthentisierung verwendet werden soll. Beispielsweise kann vorgesehen sein, dass für eines oder mehrere Länder ein Subskriptionsdatensatz Si festgelegt wird, der verwendet wird, wenn sich das Mobilfunkendgerät 102 in dem jeweiligen Land befindet und für keines der verfügbaren Mobilfunknetze 101-i ein Subskriptionsdatensatz Si in der Teilnehmeridentifikationseinheit 105 gespeichert ist. Auf diese Weise kann erreicht werden, dass der Teilnehmer lediglich auf das in der Regel günstigere nationale Roaming zurückgreifen kann und nicht das internationale Roaming zu nutzen braucht.

Die Auswahl des Mobilfunknetzes 101-i, in das der Teilnehmer eingebucht wird, wenn für keines der verfügbaren Mobilfunknetze 101-i ein Subskriptionsdatensatz Si in der Teilnehmeridentifikationseinheit 105 gespeichert ist, erfolgt nach Kriterien, die ebenfalls in der Teilnehmeridentifikationseinheit 105 hinterlegt sind. Hierzu kann in der Teilnehmeridentifikationseinheit 105 eine Liste gespeichert sein, in der verschiedene Mobilfunknetze 101-i mit unterschiedlichen Prioritäten angegeben sind, und die Steuerungseinrichtung 106 kann das verfügbare Mobilfunknetz 101-i mit der höchsten Priorität auswählen, um den Teilnehmer in dem Mobilfunknetz 101-i einzubuchen. Gleichfalls kann das Mobilfunknetz 101-i beispielsweise von dem Teilnehmer manuell durch eine Eingabe an dem Mobilfunkendgerät 102 ausgewählt werden.

Nach der Auswahl eines Mobilfunknetzes 101-i und eines Subskriptionsdatensatzes Si meldet sich das Mobilfunkendgerät 102 an dem ausgewählten Mobilfunknetz 101-i an. Nachfolgend wird die Teilnehmerauthentifizierung in dem ausgewählten Mobilfunknetz 101-i vorgenommen. Hierzu wird der von der Steuerungseinrichtung 106 für Teilnehmerauthentisierung ausgewählte Subskriptionsdatensatz Si aktiviert. In Bezug auf die von dem Masterdatensatz S1 verschiedenen Subskriptionsdatensätze Si geschieht dies in einer Ausgestaltung nach der Anmeldung an dem Mobilfunknetz 101-i, kann jedoch in weiteren Ausführungsformen auch bereits vor der Anmeldung vorgenommen werden. Die Aktivierung dieser Subskriptionsdatensätze erfolgt vorzugsweise ausgehend von dem Masterdatensatz S1, der zuvor aktiviert ist. Soll der Masterdatensatz S1 zur Teilnehmerauthentisierung verwendet werden, bleibt er aktiviert.

Die Teilnehmerauthentifizierung umfasst die Prüfung der Subskriptionsdaten und kann beispielsweise in der zuvor bereits beschriebenen Weise vorgenommen werden. Zur Prüfung der Subskriptionsdaten werden netzwerkseitig die dem aktivierten Subskriptionsdatensatz Si zugeordneten Teilnehmerdaten Ti herangezogen, die im Heimatregister 104-i des Mobilfunknetzes 101-i gespeichert sind, wenn der Zugriff auf das Mobilfunknetz 101-i ohne Verwendung des Roamings erfolgt. Aufgrund der erfolgreichen Teilnehmerauthentisierung wird der Teilnehmer in dem betreffenden Mobilfunknetz 101-i eingebucht. Solange der Teilnehmer in dem Mobilfunknetz 101-i eingebucht ist, bleibt der zur Authentisierung verwendete Subskriptionsdatensatz Si vorzugsweise aktiviert.

Wenn das Mobilfunkendgerät 102 die Verbindung zu einem Mobilfunknetz 101-i verliert, so dass eine erneute Netzauswahl und eine erneute Anmeldung an einem Mobilfunknetz 101-i erforderlich wird, dann aktiviert die Steuerungseinrichtung 106 vorzugsweise zunächst wieder den Masterdatensatz S1, sofern dieser zuvor nicht aktiviert gewesen ist, d.h. sofern der Teilnehmer zuvor unter Verwendung des Masterdatensatzes S1 in ein Mobilfunknetz 101-i eingebucht wurde. Sodann wird in der zuvor beschriebenen Weise erneut ein Mobilfunknetz 101-i und ein Subskriptionsdatensatz S1 für die Einbuchung in ein verfügbares Mobilfunknetz 101-i ausgewählt. Beim Verlust der Verbindung zu einem Mobilfunknetz S1 wird somit grundsätzlich zunächst der Masterdatensatz S1 aktiviert, bevor bei der erneuten Netzauswahl ggf. wiederum ein anderer Subskriptionsdatensatz Si zur Teilnehmerauthentisierung verwendet wird.

In vorgegebenen Situationen kann jedoch auf den "Rückfall" auf den Masterdatensatz verzichtet und unmittelbar auf einen anderen Subskriptionsdatensatz Si als den Masterdatensatz S1 gewechselt werden. Ein Beispiel für eine solche Situation ist ein Roaming-Handover, bei dem die Verbindung des Mobilfunkendgeräts 102 von einer ersten Zelle eines ersten Mobilfunknetzes 101-i auf eine zweite Zelle eines zweiten Mobilfunknetzes 101-i umgeschaltet wird. In diesem Fall kann die Steuerungseinrichtung 106 ausgehend von einem dem ersten Mobilfunknetz 101-i zugeordneten Subskriptionsdatensatz Si den Subskriptionsdatensatz Si aktivieren, der dem zweiten Mobilfunknetz 101-i zugeordnet ist - auch wenn es sich hierbei nicht um den Masterdatensatz S1 handelt. Die Aktivierung kann insbesondere aufgrund der Auswahl des Ziel-Mobilfunknetzes 101-i des Roaming-Handovers vorgenommen werden, die innerhalb des Mobilfunkendgeräts 102 oder in dem Ursprungs-Mobilfunknetz 101-i erfolgen kann (im letzteren Fall sendet das Ursprungs-Mobilfunknetz 101-i eine Mitteilung an das Mobilfunkendgerät 102, in der das Ziel-Mobilfunknetz 101-i des Roaming-Handovers spezifiziert wird).

Mit der Aktivierung eines Subskriptionsdatensatzes Si kann auch die Aktivierung der ggf. vorhandenen zugehörigen Steuerungsparameter verbunden sein. Dabei sind vorzugsweise stets nur die Steuerungsparameter aktiviert, die dem aktivierten Subskriptionsdatensatz Si zugeordnet sind. Unabhängig von der Aktivierung eines bestimmten Subskriptionsdatensatzes Si kann jedoch auf die netzübergreifenden Daten in der Teilnehmeridentifikationseinheit 105 zugegriffen werden. Auf diese Weise stehen dem Teilnehmer insbesondere jederzeit seine persönlichen Daten und Mitteilungen zur Verfügung, die in der Teilnehmeridentifikationseinheit 105 gespeichert sind.

Wenn in der Teilnehmeridentifikationseinheit 105 einer oder mehrere unvollständige Subskriptionsdatensätze Si gespeichert sind, kann die Auswahl eines Mobilfunknetzes 101-i grundsätzlich in der gleichen Weise wie zuvor beschrieben unter Berücksichtigung der Mobilfunknetze 101-i erfolgen, die den unvollständigen Subskriptionsdatensätzen Si zugeordnet sind. Nach der Auswahl eines Mobilfunknetzes 101-i, dessen zugeordneter Subskriptionsdatensatz Si unvollständig ist, wird jedoch zunächst ein vollständiger Subskriptionsdatensatz Si, vorzugsweise der Masterdatensatz S1, aktiviert. Sodann erfolgt die Anmeldung an dem ausgewählten Mobilfunknetz 101-i unter Verwendung des Masterdatensatzes S1. Nach der Anmeldung werden von dem Mobilfunknetz 101-i die fehlenden Informationen des unvollständigen Subskriptionsdatensatzes Si angefordert. Die fehlenden Information können, wie zuvor bereits beschrieben, den Authentisierungsschlüssel des Teilnehmers zur Authentisierung in dem Mobilfunknetz 101-i umfassen. Aufgrund der Anforderung werden die Informationen von dem Mobilfunknetz an die Teilnehmeridentifikationseinrichtung 105 gesendet und dort in dem unvollständigen Subskriptionsdatensatz Si gespeichert. Die Anforderung sowie die Speicherung können von der Steuerungseinrichtung 106 der Teilnehmeridentifikationseinrichtung 105 vorgenommen bzw. gesteuert werden. Nach der Speicherung der erhaltenen Informationen aktiviert die Steuerungseinrichtung 106 den vervollständigten Subskriptionsdatensatz Si. Unter Verwendung dieses Subskriptionsdatensatzes Si kann das Mobilfunkendgerät 102 sodann in das zugehörige Mobilfunknetz 101-i eingebucht werden. Zuvor kann die Steuerungseinrichtung 106 veranlassen, dass das Mobilfunkendgerät 102 das Mobilfunknetz 101-i, in dem es dann noch unter Verwendung des Masterdatensatzes S1 eingebucht ist, verlässt.

Anhand des zuvor beschriebenen Mechanismus ist es möglich, unvollständige Subskriptionsdatensätze Si zu vervollständigen. Der Mechanismus kann insbesondere dann eingesetzt werden, wenn die fehlenden Informationen aufgrund von Sicherheitserwägung oder aus anderen Gründen nicht dem Hersteller der Teilnehmeridentifikationseinheit 105 oder der ausgebende Einrichtung zur Verfügung gestellt werden sollen, um sie in der Teilnehmeridentifikationseinheit zu speichern. Die Anforderung und Speicherung der fehlenden Informationen braucht nur beim ersten Zugriff auf das betreffende Mobilfunknetz 101-i vorgenommen zu werden. Bei nachfolgenden Zugriffen können die in der Teilnehmeridentifikationseinheit 105 gespeicherten, beim ersten Zugriff ergänzten Subskriptionsdaten verwendet werden.

Den verschiedenen Subskriptionsdatensätzen Si, die in dem Teilnehmeridentifikationsmodul gespeichert sind, und den zugehörigen, in dem Heimatregistern 104-i der Mobilfunknetze 101-i gespeicherten Teilnehmerdaten ist in einer Ausführungsform jeweils eine Rufnummer zugeordnet, unter welcher der Teilnehmer erreichbar ist, wenn der zugehörige Subskriptionsdatensatz Si aktiviert ist. Dies ergibt sich daraus, dass der Teilnehmer in einem Heimatregister 104-i als eingebucht registriert wird, nachdem er sich unter Verwendung desjenigen Subskriptionsdatensatzes Si in ein Mobilfunknetz 101-i eingebucht hat, der den Teilnehmerdaten Ti zugeordnet ist, die in dem betreffenden Heimatregister 104-i gespeichert sind. Dies ist sowohl bei Einbuchung in dem Mobilfunknetz 101-i der Fall, dem das Heimatregister 104-i zugeordnet ist, als auch beim Roaming-Zugriff auf ein anderes Mobilfunknetz 101-i.

Unter den Rufnummern, die den übrigen, deaktivierten Subskriptionsdatensätzen Si zugeordnet sind, ist der Teilnehmer jedoch nicht ohne weiteres erreichbar. Verbindungsanforderungen unter der Rufnummer, die beispielsweise ein Anrufer übermittelt, um einen Sprach- oder Videoanruf zu dem Teilnehmer aufzubauen, werden somit nicht zu dem Teilnehmer weitergeleitet, und/oder unter der Rufnummer an den Teilnehmer adressierte Nachrichten werden nicht zugestellt.

In einer Ausgestaltung wird sichergestellt, dass der Teilnehmer auch dann unter der Rufnummer erreichbar ist, die ihm in seinem Hauptnetz zugeordnet ist, wenn er sich unter Verwendung eines anderen Subskriptionsdatensatzes Si als dem Masterdatensatz S1 in ein Mobilfunknetz 101-i einbucht. Hierzu wird im Heimatregister 104-i des Hauptnetzes 101-i eine Rufumleitung zu der dem aktivierten Subskriptionsdatensatz Si zugeordneten Rufnummer aktiviert.

Die Rufumleitung kann insbesondere im Rahmen der Anmeldung des Teilnehmers in einem bei der Netzauswahl ausgewählten Mobilfunknetz 101-i aktiviert werden. Dabei kann vorgesehen sein, dass die Steuerungseinrichtung 106 der Teilnehmeridentifikationseinheit 105 nach der Anmeldung an dem betreffenden Mobilfunknetz 101-i eine Nachricht an das Heimatregisters 104-1 des Hauptnetzes 101-1 sendet, mit der das Heimatregister 104-1 informiert wird, dass der Teilnehmer mit einem anderen Subskriptionsdatensatz Si als dem Masterdatensatz S1 in ein Mobilfunknetz 101-i eingebucht wird. Der verwendeten Subskriptionsdatensatz Si und/oder die zugehörige Rufnummer werden in der Nachricht ebenfalls angegeben. Darüber hinaus wird das Heimatregister 101 in der Nachricht oder durch eine separate Nachricht des ausgewählten Mobilfunknetzes 101-i informiert, an welchem Mobilfunknetz 101-i sich der Teilnehmer angemeldet hat. Aufgrund der Nachricht der Steuerungseinrichtung 106 wird in dem Heimatregister 104-1 eine Rufumleitung zu der Rufnummer aktiviert, die dem Subskriptionsdatensatz Si zugeordnet ist, der zur Teilnehmerauthentisierung in dem ausgewählten Mobilfunknetz 101-i herangezogen wird. Sofern nicht die Rufnummer sondern der Subskriptionsdatensatz Si in der Nachricht spezifiziert wird, kann die Rufnummer in Zuordnung zu dem Subskriptionsdatensatz Si in dem Heimatregister 104-1 hinterlegt sein.

Alternativ zu der Benachrichtigung des Heimatregisters 104-1 des Hauptnetzes 101-1 durch die Steuerungseinrichtung 106 der Teilnehmeridentifikationseinheit 105, kann auch vorgesehen sein, dass das ausgewählten Mobilfunknetz 101-i das Heimatregister 104-1 entsprechend informiert, wenn sich der Teilnehmer an dem Mobilfunknetz 101-i anmeldet. Hierzu kann die Steuerungseinrichtung 106 bei der Anmeldung Informationen über das Hauptnetz 101-1 des Teilnehmers und die Teilnehmerkennung im Hauptnetz 101-1 an das ausgewählte Mobilfunknetz 101-i senden, oder diese Informationen sind in Zuordnung zu den (lokalen) Teilnehmerdaten Ti in dem Mobilfunknetz 101-i gespeichert.

Die Aktivierung der Rufumleitung erfolgt in einer Ausgestaltung aufgrund des Erhalts der Nachricht der Steuerungseinrichtung 106 oder des ausgewählten Mobilfunknetzes 101-i in dem Heimatregister 104-1 des Hauptnetzes 101-1. In einer weiteren Ausgestaltung führt das Heimatregister 104-1 unter Verwendung der Umleitungsrufnummer einen Suchruf (einen so genannten Paging-Ruf) des Teilnehmers in dem ausgewählten Mobilfunknetz 101-i durch und aktiviert die Rufumleitung erst dann, wenn der Suchruf beantwortet worden ist. Die Beantwortung des Suchrufs kann von dem Endgerät 102 des Teilnehmers nach erfolgreicher Einbuchung in das ausgewählte Mobilfunknetz 101-i vorgenommen werden. In dieser Ausgestaltung wird vermieden, dass eine Rufumleitung einge-richtet wird, obwohl der Teilnehmer von dem ausgewählten Mobilfunknetz 101-1 beim Einbuchungsvorgang abgewiesen wird.

Bei der Kommunikation mit dem Heimatregister 104-1 des Hauptnetzes 101-1 identifiziert die Steuerungseinrichtung 106 den Teilnehmer in einer Ausgestaltung anhand von dessen Teilnehmerkennung im Hauptnetz 101-1, die dem Masterdatensatz S1 zugeordnet bzw. in diesem enthalten ist. Der Masterdatensatz S1 kann bei der Anmeldung in dem Mobilfunknetz 101-i zunächst noch aktiviert sein, insbesondere um darauf zum Auslesen der Teilnehmerkennung zuzugreifen, wenn die Steuerungseinrichtung 106 die Nachricht an das Heimatregister 104-i des Hauptnetzes 101-1 sendet. Zur Durchführung der Teilnehmerauthentifizierung in dem ausgewählten Mobilfunknetz 101-i aktiviert die Steuerungseinrichtung 106 jedoch den hierfür zu verwendenden Subskriptionsdatensatz Si. Sofern die Anmeldung an dem ausgewählten Mobilfunknetz 101-i bei aktiviertem Masterdatensatz S1 erfolgt, kann es auch vorgesehen sein, dass die Steuerungseinrichtung 106 das ausgewählte Mobilfunknetz 101-i darüber informiert, dass ein diesem Mobilfunknetz 101-i zugeordneten Subskriptionsdatensatz Si aktiviert und zur Teilnehmerauthentisierung verwendet werden soll. Aufgrund dieser Information kann das ausgewählte Mobilfunknetz 101-i den Teilnehmer als Heimatnutzer anstatt als Roaming-Nutzer einbuchen und die in seinem Heimatregister 104-i gespeicherten Teilnehmerdaten zur Teilnehmerauthentifizierung heranziehen.

Die Abrechnung der Nutzung von Mobilfunkdiensten durch den Teilnehmer kann in jedem Mobilfunknetz 101-i separat erfolgen. Der Nutzer erhält in diesem Fall mehrere Mobilfunkrechnungen. Zur Vereinfachung der Abrechnung ist in einer weiteren Ausführungsform vorgesehen, dass die Gebühren für die Nutzung von Mobilfunkdiensten in der Mehrzahl von Mobilfunknetzen 101-i, für die jeweils ein Subskriptionsdatensatz Si in der Teilnehmeridentifikationseinheit 105 des Teilnehmers gespeichert ist, in einer Mobilfunkrechnung zusammengefasst werden. Hierbei handelt es sich vorzugsweise um die Mobilfunkrechnung, die für das Hauptnetz 101-1 des Teilnehmers bzw. durch eine Abrechnungseinheit des Hauptnetzes 101-1 erstellt wird. Um die Zusammenfassung zu ermöglichen, übermitteln die betreffenden Mobilfunknetze 101-i Abrechnungsinformationen an das Hauptnetz 101-1 bzw. dessen Abrechnungseinheit. Die Abrechnungsinformationen enthalten die Gebühren, die für den Nutzer bei der Nutzung von Mobilfunkdiensten in den betreffenden Mobilfunknetzen 101-i angefallen sind, Die Übermittlung kann aufgrund eines entsprechenden Vermerks in den Teilnehmerdaten erfolgen, die in den Heimatregistern 104-i der Mobilfunknetze 101-i gespeichert sind. Oder die Mobilfunknetze 101-i übermitteln die Abrechnungsdaten aufgrund einer Information der Teilnehmeridentifikationseinrichtung 105, die jeweils bei der Anmeldung an einem Mobilfunknetz 101-i an dieses gesendet wird.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt.

Weitere Varianten der Erfindung und ihrer Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Teilnehmeridentifikationseinrichtung zur Teilnehmerauthentisierung in einem Mobilfunknetz, enthaltend einen ersten Subskriptionsdatensatz zur Teilnehmerauthentisierung in einem ersten Mobilfunknetz, und wenigstens einen zweiten Subskriptionsdatensatz zur Teilnehmerauthentisierung in einem zweiten Mobilfunknetz, wobei jeweils einer der enthaltenen Subskriptionsdatensätze in Abhängigkeit von einem verfügbaren Mobilfunknetz zur Teilnehmerauthentisierung verwendbar ist, die Teilnehmeridentifikationseinrichtung eine Steuerungseinrichtung umfasst, die dazu ausgestaltet ist, einen Subskriptionsdatensatz in Abhängigkeit von einer empfangenen Kennung des verfügbaren Mobilfunknetzes für die Teilnehmerauthentisierung zu aktivieren, **dadurch gekennzeichnet dass** die Steuerungseinrichtung dazu ausgestaltet ist, einen vollständigen ersten Subskriptionsdatensatz zu aktivieren, wenn ein zweiter Subskriptionsdatensatz, dem ein verfügbares Mobilfunknetz zugeordnet ist, unvollständig ist, eine Anmeldung unter Verwendung des besagten ersten Subskriptionsdatensatzes im besagten verfügbaren Mobilfunknetz durchzuführen und die fehlenden Informationen des unvollständigen Subskriptionsdatensatzes vom besagten Mobilfunknetz anzufordern und im unvollständigen Subskriptionsdatensatz zu speichern, um den unvollständigen Subskriptionsdatensatz zu vervollständigen.

2. Teilnehmeridentifikationseinrichtung nach Anspruch 1, wobei die Steuerungseinrichtung dazu ausgestaltet ist, den vervollständigten Subskriptionsdatensatz nach der Vervollständigung zu aktivieren.

3. Teilnehmeridentifikationseinrichtung nach einem der vorangegangenen Ansprüche, wobei die Steuerungseinrichtung dazu ausgestaltet ist, einen vorgegebenen Subskriptionsdatensatz aufgrund eines Einschaltens der Teilnehmeridentifikationseinrichtung und/oder nach einer Beendigung einer Verbindung zu einem Mobilfunknetz zu aktivieren.

4. Teilnehmeridentifikationseinrichtung nach einem der vorangegangenen Ansprüche, wobei die Steuerungseinrichtung dazu ausgestaltet ist, einen vorgegebenen Subskriptionsdatensatz zur Verwendung bei der Teilnehmerauthentisierung zu aktivieren, falls die Kennung keines der Mobilfunknetze empfangen wird, denen die in der Teilnehmeridentifikationseinrichtung gespeicherten Subskriptionsdatensätze zugeordnet sind.

5. Teilnehmeridentifikationseinrichtung nach einem der vorangegangenen Ansprüche, wobei der erste und/oder der zweite Subskriptionsdatensatz eine Teilnehmerkennung umfasst, die in dem jeweiligen Mobilfunknetz, insbesondere in einem Heimatregister des jeweiligen Mobilfunknetzes, registriert ist.

6. Teilnehmeridentifikationseinrichtung nach einem der vorangegangenen Ansprüche, wobei der erste und/oder zweite Subskriptionsdatensatz wenigstens einen kryptografischen Authentisierungsschlüssel umfasst.

7. Teilnehmeridentifikationseinrichtung nach einem der vorangegangenen Ansprüche, enthaltend netzbetreiberübergreifende Daten, auf die unabhängig von der Aktivierung eines Subskriptionsdatensatzes zugegriffen werden kann.

8. Mobilfunkendgerät umfassend eine Teilnehmeridentifikationseinrichtung nach einem der vorangegangenen Ansprüche.

9. Mobilfunksystem umfassend eine Teilnehmeridentifikationseinrichtung nach einem der Ansprüche 1-7, und/oder ein Mobilfunkendgerät nach Anspruch 8.

10. Mobilfunksystem nach Anspruch 9, wobei dem ersten und zweiten Subskriptionsdatensatz jeweils eine Rufnummer zugeordnet ist, und weiterhin umfassend eine Rufumleitungseinrichtung, die dazu ausgestaltet ist, aufgrund einer Mitteilung über die Aktivierung des zweiten Subskriptionsdatensatzes eine Rufumleitung von der dem ersten Subskriptionsdatensatz zugeordneten Rufnummer zu der dem zweiten Subskriptionsdatensatz zugeordneten Rufnummer zu initiieren.

11. Mobilfunksystem nach Anspruch 10, wobei die Teilnehmeridentifikationseinrichtung oder das zweite Mobilfunknetz dazu eingerichtet ist, die Mitteilung über die Aktivierung an die Rufumleitungseinrichtung zu senden.

12. Mobilfunksystem nach einem der Ansprüche 9-11, wobei ein Mobilfunknetz dazu eingerichtet ist, nach der Teilnehmerauthentisierung mittels eines in der Teilnehmeridentifikationseinrichtung aktivierten Subskriptionsdatensatzes in dem Mobilfunknetz, Abrechnungsinformationen über eine Nutzung von Mobilfunkdiensten an ein Mobilfunknetz zu übermitteln, das einem vorgegebenen Subskriptionsdatensatz zugeordnet ist.

13. Verfahren zum Authentisieren eines Teilnehmers in einem Mobilfunknetz, wobei eine Teilnehmeridentifikationseinrichtung zur Teilnehmerauthentisierung in einem Mobilfunknetz vorgesehen ist, die einen ersten Subskriptionsdatensatz zur Teilnehmerauthentisierung in einem ersten Mobilfunknetz, und wenigstens einen zweiten Subskriptionsdatensatz zur Teilnehmerauthentisierung in einem zweiten Mobilfunknetz enthält, wobei jeweils einer der enthaltenen Subskriptionsdatensätze in Abhängigkeit von einem verfügbaren Mobilfunknetz zur Teilnehmerauthentisierung verwendbar ist, und die Teilnehmeridentifikationseinrichtung eine Steuerungseinrichtung umfasst, die dazu ausgestaltet ist, einen Subskriptionsdatensatz in Abhängigkeit von einer empfangenen Kennung des verfügbaren Mobilfunknetzes für die Teilnehmerauthentisierung zu aktivieren, wobei das Verfahren **dadurch gekennzeichnet ist, dass** die Steuerungseinrichtung einen vollständigen ersten Subskriptionsdatensatz aktiviert, wenn ein zweiter Subskriptionsdatensatz, dem ein verfügbares Mobilfunknetz zugeordnet ist, unvollständig ist, eine Anmeldung unter Verwendung des besagten ersten Subskriptionsdatensatzes im besagten verfügbaren Mobilfunknetz durchführt und die fehlenden Informationen des unvollständigen Subskriptionsdatensatzes vom besagten Mobilfunknetz anfordert und im unvollständigen Subskriptionsdatensatz speichert, um den unvollständigen Subskriptionsdatensatz zu vervollständigen.

## Claims

1. Subscriber identifier for subscriber authentication in a mobile telecommunications network, containing a first subscription data record for subscriber authentication in a first mobile telecommunications network, and at least one second subscription data record for subscriber authentication in a second mobile telecommunications network, wherein, dependent upon an available mobile telecommunications network, one of the contained subscription data records is usable for subscriber authentication in each case, the subscriber identifier comprises a controller which is configured to activate, dependent upon a received identifier of the available mobile telecommunications network, a subscription data record for the subscriber authentication, **characterized in that** the controller is configured to activate a complete first subscription data record when a second subscription data record, which is assigned an available mobile communications network, is incomplete, to perform a registration in the said available mobile communications network using the said first subscription data record, and to request the missing information of the incomplete subscription data record from the said mobile communication network and to store it in the incomplete subscription data record, in order to complete the incomplete subscription data record.

2. Subscriber identifier according to claim 1, wherein the controller is configured to active the completed subscription data record after the completion.

3. Subscriber identifier according to any one of the preceding claims, wherein the controller is configured to activate a prescribed subscription data record due to the fact that the subscriber identifier is switched on and/or after disconnection of a connection to a mobile telecommunications network.

4. Subscriber identifier according to any one of the preceding claims, wherein the controller is configured to activate a prescribed subscription data record for use in the subscriber authentication if no identifier of any of the mobile telecommunications networks which are assigned the subscription data records stored in the subscriber identifier is received.

5. Subscriber identifier according to any one of the preceding claims, wherein the first and/or the second subscription data record comprises a subscriber identifier that is registered in the respective mobile telecommunications network, particularly in a home register of the respective mobile telecommunications network.

6. Subscriber identifier according to any one of the preceding claims, wherein the first and/or the second subscription data record comprises at least one cryptographic authentication key.

7. Subscriber identifier according to any one of the preceding claims, containing multi-network data that can be accessed independently of the activation of a subscription data record.

8. Mobile communications device, comprising a subscription identifier according to any one of the preceding claims.

9. Mobile communications system, comprising a subscription identifier according to any one of the preceding claims 1 to 7, and/or a mobile communications device according to claim 8.

10. Mobile communications system recited in claim 9, wherein with each of the first and second subscription data records a phone number is associated, and further comprising a call forwarder that is configured to initiate, based on a notification about the activation of the second subscription data record, call forwarding from the phone number associated with the first subscription data record to the phone number associated with the second subscription data record.

11. Mobile telecommunications system according in claim 10, wherein the subscriber identifier and/or the second mobile telecommunications network is configured to send the notification about the activation to the call forwarder.

12. Mobile telecommunications system according to any one of claims 9 to 11, wherein a mobile telecommunications network is configured to transmit, after the subscriber authentication in the mobile telecommunications network using a subscription data record activated in the subscriber identifier, to a mobile telecommunications network assigned to a prescribed subscription data record, accounting information about a utilization of mobile telecommunications services.

13. Method for authenticating a subscriber in a mobile telecommunications network, wherein a subscriber identifier for subscriber authentication in a mobile communications network is provided, which contains a first subscription data record for subscriber authentication in a first mobile communications network, and at least a second subscription data record for subscriber authentication in a second mobile communications network, wherein respectively one of the contained subscription data records is usable, dependent upon an available mobile communications network, for subscriber authentication, and the subscriber identifier comprises a controller which is configured to activate a subscription data record dependent upon a received identifier of the available mobile communications network for the subscriber authentication, wherein the method is **characterized in that** the controller activates a complete first subscription data record when a second subscription data record which is assigned an available mobile communications network, is incomplete, performs a registration in the said available mobile communications network using the said first subscription data record, and requests the missing information of the incomplete subscription data record from the said mobile communications network and stores it in the incomplete subscription data set, in order to complete the incomplete subscription data record.

## Revendications

1. Dispositif d'identification de participant destiné à l'authentification de participant dans un réseau de téléphonie mobile, incluant un premier jeu de données de souscription pour l'authentification de participant dans un premier réseau de téléphonie mobile, et au moins un second jeu de données de souscription pour l'authentification de participant dans un second réseau de téléphonie mobile, un des jeux de données de souscription inclus pouvant respectivement être utilisé pour l'authentification de participant en fonction d'un réseau de téléphonie mobile disponible, le dispositif d'identification de participant comprenant un dispositif de commande, qui est conçu pour activer un jeu de données de souscription pour l'authentification de participant en fonction d'un identificateur reçu du réseau de téléphonie mobile disponible, **caractérisé en ce que** le dispositif de commande est conçu pour activer un premier jeu de données de souscription complet, quand un second jeu de données de souscription, auquel est associé un réseau de téléphonie mobile disponible, est incomplet, effectuer une demande de connexion dans ledit réseau de téléphonie mobile disponible en utilisant ledit premier jeu de données de souscription et demander les informations manquantes du jeu de données de souscription incomplet audit réseau de téléphonie mobile et les enregistrer dans le jeu de données de souscription incomplet pour compléter le jeu de données de souscription incomplet.

2. Dispositif d'identification de participant selon la revendication 1, dans lequel le dispositif de commande est conçu pour activer le jeu de données de souscription complété après l'ajout du complément.

3. Dispositif d'identification de participant selon l'une des revendications précédentes, dans lequel le dispositif de commande est conçu pour activer un jeu de données de souscription prédéfini par suite d'une mise en marche du dispositif d'identification de participant et/ou après la fin d'une connexion à un réseau de téléphonie mobile.

4. Dispositif d'identification de participant selon l'une des revendications précédentes, dans lequel le dispositif de commande est conçu pour activer un jeu de données de souscription prédéfini destiné à être utilisé lors de l'authentification de participant, si l'identificateur d'aucun des réseaux de téléphonie mobile n'est reçu, auxquels sont associés les jeux de données de souscription enregistrés dans le dispositif d'identification de participant.

5. Dispositif d'identification de participant selon l'une des revendications précédentes, dans lequel le premier et/ou le second jeu de données de souscription comprend un identificateur de participant, qui est enregistré dans le réseau de téléphonie mobile respectif, en particulier dans un enregistreur de localisation nominal du réseau de téléphonie mobile respectif.

6. Dispositif d'identification de participant selon l'une des revendications précédentes, dans lequel le premier et/ou second jeu de données de souscription comprend au moins une clé d'authentification cryptographique.

7. Dispositif d'identification de participant selon l'une des revendications précédentes, incluant des données pour tous les opérateurs de réseau, auxquelles il est possible d'accéder indépendamment de l'activation d'un jeu de données de souscription.

8. Terminal mobile de radiotéléphonie comprenant un dispositif d'identification de participant selon l'une des revendications précédentes.

9. Système de téléphonie mobile comprenant un dispositif d'identification de participant selon l'une des revendications 1 à 7 et/ou un terminal mobile de radiotéléphonie selon la revendication 8.

10. Système de téléphonie mobile selon la revendication 9, dans lequel un numéro d'appel est respectivement associé au premier et au second jeu de données de souscription, et comprenant en outre un dispositif de renvoi d'appel, qui est conçu pour déclencher un renvoi d'appel du numéro d'appel associé au premier jeu de données de souscription au numéro d'appel associé au second jeu de données de souscription par suite d'un message concernant l'activation du second jeu de données de souscription.

11. Système de téléphonie mobile selon la revendication 10, dans lequel le dispositif d'identification de participant ou le second réseau de téléphonie mobile est configuré pour envoyer le message concernant l'activation au dispositif de renvoi d'appel.

12. Système de téléphonie mobile selon l'une des revendications 9 à 11, dans lequel un réseau de téléphonie mobile est configuré pour transmettre des informations de facturation concernant l'utilisation de services de téléphonie mobile à un réseau de téléphonie mobile qui est associé à un jeu de données de souscription prédéfini, après l'authentification de participant au moyen d'un jeu de données de souscription activé dans le dispositif d'identification de participant dans le réseau de téléphonie mobile.

13. Procédé d'authentification d'un participant dans un réseau de téléphonie mobile, dans lequel un dispositif d'identification de participant est prévu pour l'authentification de participant dans un réseau de téléphonie mobile, ledit dispositif d'identification de participant incluant un premier jeu de données de souscription pour l'authentification de participant dans un premier réseau de téléphonie mobile, et au moins un second jeu de données de souscription pour l'authentification de participant dans un second réseau de téléphonie mobile, un des jeux de données de souscription inclus pouvant respectivement être utilisé pour l'authentification de participant en fonction d'un réseau de téléphonie mobile disponible, et le dispositif d'identification de participant comprenant un dispositif de commande, qui est conçu pour activer un jeu de données de souscription pour l'authentification de participant en fonction d'un identificateur reçu du réseau de téléphonie mobile disponible, le procédé étant **caractérisé en ce que** le dispositif de commande active un premier jeu de données de souscription complet, quand un second jeu de données de souscription, auquel est associé un réseau de téléphonie mobile disponible, est incomplet, effectue une demande de connexion dans ledit réseau de téléphonie mobile disponible en utilisant ledit premier jeu de données de souscription et demande les informations manquantes du jeu de données de souscription incomplet audit réseau de téléphonie mobile et les enregistre dans le jeu de données de souscription incomplet pour compléter le jeu de données de souscription incomplet.
